# EUROPEAN PATENT APPLICATION

(11) **EP 4 679 620 A1**
(43) Date of publication of application: **14.01.2026**
(21) Application number: 24766756.1
(22) Date of filing: 08.02.2024
(51) Int. Cl.: H01M 50/593, H01M 50/107, H01M 50/152, H01M 50/586

(54) **CYLINDRICAL BATTERY**

(30) Priority: 06.03.2023 JP 2023033742
(71) Applicant: Panasonic Energy Co., Ltd., Osaka 570-8511 (JP)
(72) Inventor: KOHIRA, Kazutoshi, Osaka 571-0057 (JP)
(74) Representative: Eisenführ Speiser
(86) International application number: PCT/JP2024/004283
(87) International publication number: WO 2024/185382

(57) **Abstract**

A cylindrical battery (10) comprises: an electrode body (14) in which a positive electrode (11) and a negative electrode (12) are wound with a separator (13) therebetween; an exterior can (20) in which the electrode body (14) is accommodated; a sealing body (19) which is mounted on a grooved part (28) that is formed along the circumferential direction of the exterior can (20) with a gasket (24) therebetween; and an upper insulation board (30) which is disposed between the grooved part (28) and the electrode body (14). The upper insulation board (30) has a body (31) which is mounted on the electrode body (14), and a folded part (32), the outer circumferential part of which is folded towards the body (31). The upper insulation board (30) is biased by the folded part (32) towards the electrode body (14).

## Description

### TECHNICAL FIELD

The present disclosure relates to a cylindrical battery.

### BACKGROUND ART

A cylindrical battery comprises: an electrode assembly having a positive electrode and a negative electrode wound through a separator; an outer can that houses the electrode assembly; a sealing assembly that seals an opening portion of the outer can; and an upper insulating plate arranged between a grooved portion formed along a circumferential direction of the outer can and the electrode assembly.

The upper insulating plate provides electrical insulation between the electrode assembly and the sealing assembly. In addition, when gas is discharged during in the event of abnormality of the cylindrical battery, the upper insulating plate prevents a discharged substance or the like from hitting the grooved portion of the outer can. When gas is discharged in the event of abnormality of the cylindrical battery and the upper insulating plate is released to the outside of the battery, the discharged substance or the like may hit the grooved portion and make a hole on the grooved portion, so that high-temperature gas may blow out through the hole toward the side of the outer can and burn adjacent cylindrical batteries.

For example, Patent Literature 1 discloses an upper insulating plate in which an outer circumferential portion has a thickness that is greater than or equal to 130% and less than or equal to 300% of the thickness of a center portion. The upper insulating plate according to Patent Literature 1 is less likely to be detached from the grooved portion of the outer can due to the gas discharge in the event of abnormality.

### CITATION LIST

### PATENT LITERATURE

PATENT LITERATURE 1: Japanese Unexamined Patent Application Publication No. 2013-131430

### SUMMARY

However, as a rate of gas discharge increases in the event of abnormality, there is a concern that even the upper insulating plate in Patent Literature 1 may be released to the outside of the battery without being held in the grooved portion of the outer can.

Therefore, it is an advantage of the present disclosure to provide a cylindrical battery in which an insulating plate that is arranged between a grooved portion of an outer can and an electrode assembly is less likely to be released to the outside of the battery when gas is discharged in the event of abnormality.

A cylindrical battery according to the present disclosure comprises: an electrode assembly having a positive electrode and a negative electrode wound through a separator; an outer can that houses the electrode assembly; a sealing assembly mounted on a grooved portion through a gasket, the grooved portion being formed along a circumferential direction of the outer can; and an insulating plate arranged between the grooved portion and the electrode assembly, wherein the insulating plate has a body mounted on the electrode assembly and a folded portion formed by folding an outer circumferential portion toward the body, and the folded portion biases the insulating plate toward the electrode assembly.

According to the cylindrical battery of the present disclosure, it is possible to implement a cylindrical battery having an insulating plate that is less likely to be released to the outside of the battery when gas is discharged in the event of abnormality.

### BRIEF DESCRIPTION OF DRAWING

FIG. 1 is an axial sectional view showing a cylindrical battery as one example of an embodiment.
FIG. 2 is a perspective view showing an upper insulating plate in the one example of the embodiment.
FIG. 3 is a plan view showing the upper insulating plate in an unfolded state.
FIG. 4 is a perspective view showing an upper insulating plate in another example of the embodiment.
FIG. 5 is a plan view showing the upper insulating plate in the unfolded state.
FIG. 6 is a perspective view showing an upper insulating plate in another example of the embodiment.
FIG. 7 is a plan view showing the upper insulating plate in the unfolded state.
FIG. 8 is a perspective view showing an upper insulating plate as another example of the embodiment.
FIG. 9 is a plan view showing the upper insulating plate in the unfolded state.

### DESCRIPTION OF EMBODIMENTS

Hereinafter, examples of the embodiment of the present disclosure will be described in detail. In the following description, specific shapes, materials, directions, numerical values, or the like are merely examples for easy understanding of the present disclosure, and therefore they can appropriately be changed in matching with applications, purposes, specifications, or the like.

### [Cylindrical Battery]

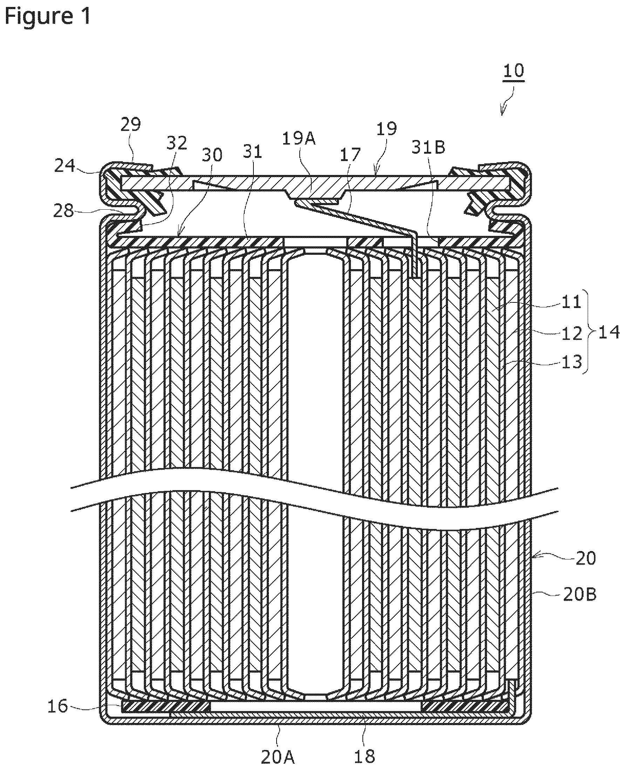

With reference to FIG. 1, a cylindrical battery 10 as one example of the embodiment will be described.

The cylindrical battery 10 is a non-aqueous electrolyte secondary battery (lithium-ion battery) using a non-aqueous electrolyte. However, the cylindrical battery in the present disclosure is not limited to the non-aqueous electrolyte secondary battery of the present embodiment and may be a primary battery or may be a battery using an aqueous electrolyte. In the following, each member may be described using axial, radial, and circumferential directions of the cylindrical battery 10. In addition, the cylindrical battery 10 on the side of a sealing assembly 19 in an axial direction (height direction) may be defined as "upper side", and an outer can 20 on the side of a bottom portion 20A in the axial direction may be defined as "lower side".

As shown in FIG. 1, the cylindrical battery 10 comprises an electrode assembly 14, a non-aqueous electrolyte, a bottomed cylindrical outer can 20 that houses the electrode assembly 14 and the electrolyte, and the sealing assembly 19 that seals an opening of the outer can 20. The electrode assembly 14 includes a positive electrode 11, a negative electrode 12, and separators 13 interposed between the positive electrode 11 and the negative electrode 12. The electrode assembly 14 has a winding structure in which the positive electrode 11 and the negative electrode 12 are wound through the separators 13. The outer can 20 is a bottomed cylindrical container having the bottom portion 20A and a cylindrical portion 20B.

As will be described later in detail, the cylindrical battery 10 comprises an upper insulating plate 30 arranged between a grooved portion 28 formed along a circumferential direction of the outer can 20 and the electrode assembly 14. The upper insulating plate 30 has a body 31 mounted on the electrode assembly 14 and folded portions 32 formed by folding an outer circumferential portion toward the body 31, and the folded portions 32 bias the upper insulating plate 30 toward the electrode assembly 14. As a result, the upper insulating plate 30 is less likely to be detached when gas is discharged in the event of abnormality.

The non-aqueous electrolyte contains, for example, non-aqueous solvent and electrolyte salt solved in the non-aqueous solvent. As the non-aqueous solvent, there may be used, for example, esters, ethers, nitriles, amides, and mixed solvent of two or more of the group consisting of these. The non-aqueous solvents may contain halogen substitution products in which at least a portion of hydrogen in these solvents is substituted with halogen atoms such as fluorine. The non-aqueous electrolyte is not limited to liquid electrolyte, and may be solid electrolyte using gel like polymers or the like. As the electrolyte salt, lithium salt such as LiPF₆ is used.

The electrode assembly 14 has the long-shaped positive electrode 11, the long-shaped negative electrode 12, and two long-shaped separators 13. The electrode assembly 14 also has a positive electrode lead 17 joined to the positive electrode 11 and a negative electrode lead 18 joined to the negative electrode 12 as electrode leads. In order to suppress lithium deposition, the negative electrode 12 is formed with a dimension slightly larger than the positive electrode 11. Therefore, the lower end of the negative electrode 12 is arranged closer to the bottom portion 20A of the outer can 20 than the lower end of the positive electrode 11. The two separators 13 are formed with a dimension that is at least slightly larger than the positive electrode 11 and are arranged, for example, to hold the positive electrode 11 therebetween.

The positive electrode 11 has a positive electrode core and a positive electrode mixture layer formed on both the surfaces of the positive electrode core. As the positive electrode core, there may be used a foil made of metal that is stable in a potential range of the positive electrode 11, such as aluminum and aluminum alloy, a film with the metal arranged on its surface layer, or the like. The positive electrode mixture layer contains a positive electrode active material, a conductive agent such as acetylene black, and a binding agent made of polyvinylidene fluoride (PVdF) or the like. The positive electrode 11 can be fabricated by, for example, coating the positive electrode core with positive electrode mixture slurry containing a positive electrode active material, a conductive agent, a binding agent or the like, drying the coating, and then compressing the coating to form a positive electrode mixture layer on both the surfaces of the positive electrode core.

As the positive electrode active material, lithium-transition metal composite oxides are used, for example. Examples of metal elements contained in the lithium-containing metal composite oxides may include Ni, Co, Mn, Al, B, Mg, Ti, V, Cr, Fe, Cu, Zn, Ga, Sr, Zr, Nb, In, Sn, Ta, and W. One suitable example of the lithium-containing metal composite oxides is lithium metal composite oxides containing at least one of the group consisting of Ni, Co, and Mn. Specific examples thereof may include composite oxides containing Ni, Co and MN, and composite oxides containing Ni, Co and Al.

The negative electrode 12 has a negative electrode core and a negative electrode mixture layer formed on both the surfaces of the negative electrode core. As the negative electrode core, there may be used a foil made of metal that is stable in a potential range of the negative electrode 12, such as copper or copper alloy, a film with the metal arranged on its surface layer, or the like. The negative electrode mixture layer contains a negative electrode active material and a binding agent such as styrene-butadiene rubber (SBR). The negative electrode 12 can be fabricated by, for example, coating the negative electrode core with negative electrode mixture slurry containing a negative electrode active material, a binding agent, or the like, drying the coating, and then compressing the coating to form a negative electrode mixture layer on both the surfaces of the negative electrode core.

As the negative electrode active material, there may be used, for example, natural graphite such as flake graphite, massive graphite, and earthy graphite, and artificial graphite such as massive artificial graphite, and graphitized mesophase carbon microbeads. As the negative electrode active material, there may be used metal that alloys with lithium such as Si and Sn, alloy containing the metal, and compounds containing the metal, and these may be used together with graphite. One suitable example of such an active material is a Si-containing material in which Si particles are dispersed in a silicate phase, such as an SiO₂ phase or a lithium silicate phase, or in an amorphous carbon phase.

The upper insulating plate 30 and a lower insulating plate 16, which are described later in detail, are arranged above and below the electrode assembly 14, respectively. In the example shown in FIG. 1, the positive electrode lead 17 attached to the positive electrode 11 extends through an opening portion 31B of the upper insulating plate 30 toward the sealing assembly 19, and the negative electrode lead 18 attached to the negative electrode 12 extends along the outside of the lower insulating plate 16 toward the bottom portion 20A of the outer can 20. The positive electrode lead 17 is connected by welding or the like to an inner surface of a vent portion 19A of the sealing assembly 19 that faces the inside of the outer can 20, so that the sealing assembly 19 serves as a positive electrode terminal. The negative electrode lead 18 is connected by welding or the like to an inner surface of the bottom portion 20A of the outer can 20, so that the outer can 20 serves as a negative electrode terminal.

Between the outer can 20 and the sealing assembly 19, a gasket 24 is provided to secure the sealability inside the battery and the insulation performance between the outer can 20 and the sealing assembly 19. The cylindrical portion 20B includes the annular grooved portion 28 along the circumferential direction and an annular shoulder portion 29. The grooved portion 28 is formed by recessing part of the cylindrical portion 20B inward in the radial direction by spinning. The shoulder portion 29 is formed so as to extend to the inside in the radial direction when an upper end portion of the cylindrical portion 20B is bent radially inward and crimped to a circumferential edge portion of the sealing assembly 19. The sealing assembly 19 is held between the shoulder portion 29 and the grooved portion 28 through the gasket 24 and fixed to the outer can 20 by the crimping.

The sealing assembly 19 is a disc-shaped member comprising an exhaust valve. The sealing assembly 19 has a vent portion 19A that breaks when the internal pressure of the battery exceeds a predetermined threshold. The vent portion 19A includes a lower projection that projects toward the inside of the battery and that is provided in a radially center portion, and a thin-walled portion formed around the lower projection. The thickness of the thin-walled portion is smaller toward the outer side in the radial direction. As the internal pressure rises in the event of abnormality of the cylindrical battery 10, the annular end portion in the thin-walled portion breaks so that a gas outlet is formed.

### [Upper Insulating Plate]

With reference to FIGS. 1 to 3, the upper insulating plate 30 in one example of the embodiment will be described.

As shown in FIG. 1, the upper insulating plate 30 is arranged between the grooved portion 28 formed along the circumferential direction of the outer can 20 and the electrode assembly 14. The upper insulating plate 30 provides electrical insulation between the electrode assembly 14 and the sealing assembly 19. In addition, when gas is discharged in the event of abnormality of the cylindrical battery 10, the upper insulating plate 30 prevents a discharged substance or the like from hitting the grooved portion 28 of the outer can 20.

The upper insulating plate 30 has the body 31 mounted on the electrode assembly 14 and the folded portions 32 formed by folding the outer circumferential portion toward the body 31. Here, "folded" refers to the state where the angle formed between the body 31 and the folded portions 32 is substantially less than or equal to 60°. Moreover, as will be described later in detail, the upper insulating plate 30 is folded after the upper insulating plate 30 is inserted into the outer can 20.

The upper insulating plate 30 is biased toward the electrode assembly 14 from the grooved portion 28 by the folded portions 32. More specifically, the folded portions 32 are engaged with the lower portion of the grooved portion 28 inside the outer can 20, and the upper insulating plate 30 is biased toward the electrode assembly 14 by the biasing force of the folded portions 32. This causes a downward force to act on the upper insulating plate 30.

Since the downward force acts on the upper insulating plate 30 in the present embodiment, the upper insulating plate 30 is less likely to be released to the outside of the battery when gas is discharged in the event of abnormality of the cylindrical battery 10. As a result, it is possible to prevent a discharged substance of gas or the like from hitting the grooved portion 28 of the outer can 20 and causing formation of a hole in the grooved portion 28.

In addition, according to the upper insulating plate 30, a dispersion in clearance between the grooved portion 28 of the outer can 20 and the electrode assembly 14 can be absorbed by the size of an angle between the body 31 and the folded portions 32.

The upper insulating plate 30 is preferably greater than or equal to 0.2 mm and less than or equal to 0.7 mm. In addition, the upper insulating plate 30 is preferably made of thermoplastic resin that is a material with elasticity. For the upper insulating plate 30, a material such as polypropylene is suitably used.

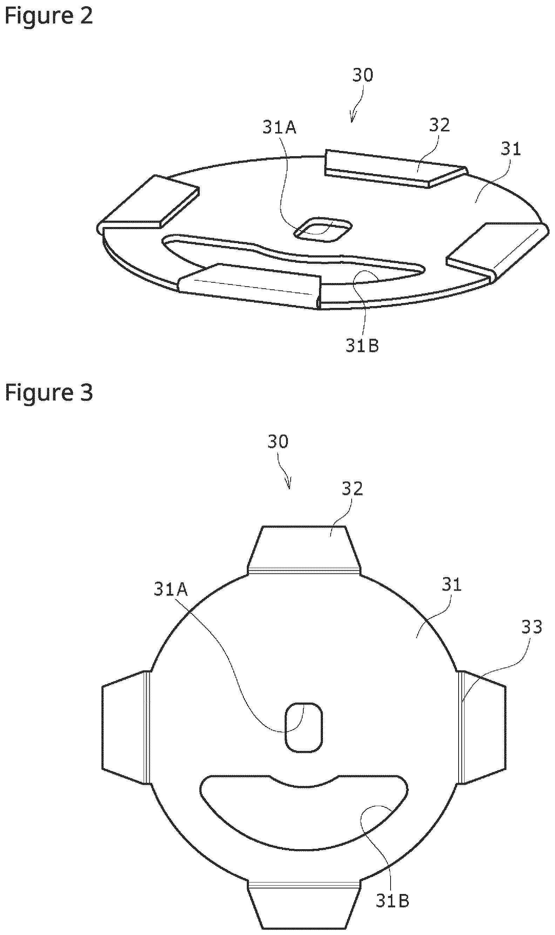

As shown in FIGS. 2 and 3, the upper insulating plate 30 has the body 31 in a substantially disc shape and the four folded portions 32 in a substantially trapezoidal shape formed on the outer circumferential side of the body 31. The folded portions 32 can easily be formed by folding the outer circumferential portion of the upper insulating plate 30 at positions separated from each other on the outer circumference of the body 31. In some parts of the outer circumferential portion of the body 31, linear portions are formed, and the linear portions are arranged at equal intervals (for example, for every 90° with respect to the center of the body 31) around the outer circumference of the body 31. As a result, the upper insulating plate 30 is evenly biased by the folded portions 32, and the outer circumference of the body 31 can be made closer to a circle. The body 31 has a hole portion 31A formed substantially in a center portion and an opening portion 31B formed on one side. Through the hole portion 31A, an electrolyte is injected at the time of manufacturing, and gas is discharged in the event of abnormality. Through the opening portion 31B, the positive electrode lead 17 attached to the positive electrode 11 extends toward the sealing assembly 19.

The length of the folded portions 32 in a radial direction is preferably longer than the length of the grooved portion 28 in the radial direction. This makes it possible to enhance the insulation performance between the electrode assembly 14 and the sealing assembly 19. At boundaries between the body 31 and the folded portions 32, linear groove portions 33 are formed. The groove portions 33 are arranged on the linear portions on the outer circumference of the body 31. The folded portions 32 are folded toward the body 31 along the groove portions 33. This makes it easy to fold the folded portions 32 at the time of manufacturing. The groove portion 33 in cross section may be V-shaped or concave-shaped.

As shown in FIG. 3, the upper insulating plate 30 has protrusions formed to correspond to the folded portions 32 that protrude radially outward from the body 31 when the folded portions 32 are unfolded. The protrusions corresponding to the folded portions 32 are arranged so as to be separated from each other on the outer circumference of the body 31.

In a manufacturing process of the cylindrical battery 10, the electrode assembly 14 is housed inside the outer can 20, and then the upper insulating plate 30 is arranged above the electrode assembly 14. When the upper insulating plate 30 is inserted into the outer can 20, the folded portions 32 of the upper insulating plate 30 are folded substantially 90° upward along the groove portion 33.

Next, part of the cylindrical portion 20B of the outer can 20 (above the upper insulating plate 30) is processed by spinning so as to be recessed inward in the radial direction to form the grooved portion 28. When the grooved portion 28 is formed, the folded portions 32 are folded toward the body 31, and the folded portions 32 are engaged with the grooved portion 28. In addition, when the folded portions 32 are folded toward the body 31, a radially inward force acts on the upper insulating plate 30. At this time, the body 31 may be curved so as to swell downward.

### [Other Embodiments]

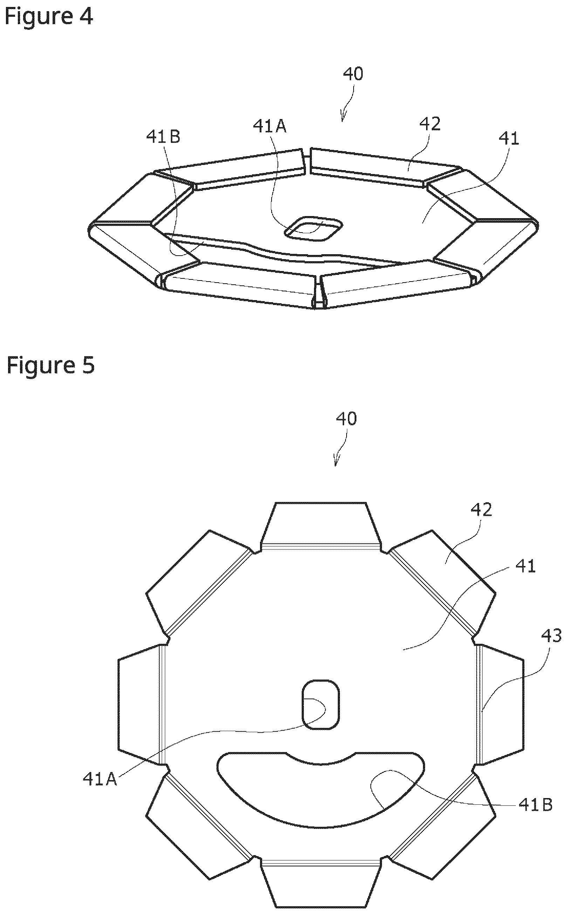

With reference to FIGS. 4 to 9, the upper insulating plates 40, 50, and 60 in other examples of the embodiment will be described. Hereinafter, only the configurational aspects different from those of the upper insulating plate 30 described above are described, and the configurational aspects similar to those of the upper insulating plate 30 are omitted.

As shown in FIGS. 4 and 5, the upper insulating plate 40 has a body 41 in a substantially disc shape and eight folded portions 42 in a substantially trapezoidal shape formed on the outer circumferential side of the body 41. The outer circumference of the body 41 is formed into a regular octagonal shape, and the folded portions 42 are formed continuously. The body 41 has a hole portion 41A and an opening portion 41B. On the outer circumference of the body 41 that is a boundary between the body 41 and each of the folded portions 42, a groove portion 43 is formed.

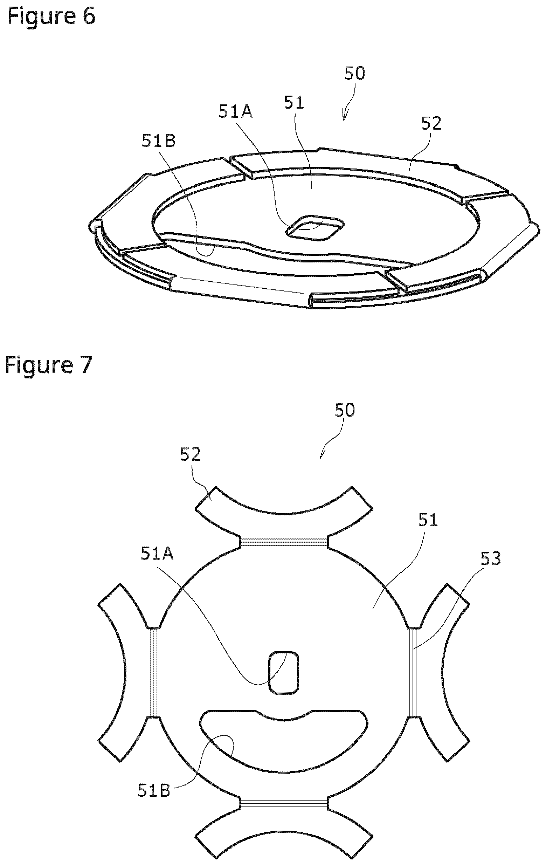

As shown in FIGS. 6 and 7, the upper insulating plate 50 has a body 51 in a substantially disc shape and a plurality of (four in the present embodiment) folded portions 52 formed on the outer circumferential side of the body 51. Linear portions are formed on some parts of the outer circumference of the body 51 for every predetermined angle with respect to the center of the body 51 (for every 90 degrees in the present embodiment), and the folded portions 52 are formed along the linear portions. The body 51 has a hole portion 51A and an opening portion 51B. The inner circumferential side and the outer circumferential side of the folded portions 52 are formed into an arc shape in the unfolded state. In the linear portion that is a boundary between the body 51 and each of the folded portions 52, a groove portion 53 is formed.

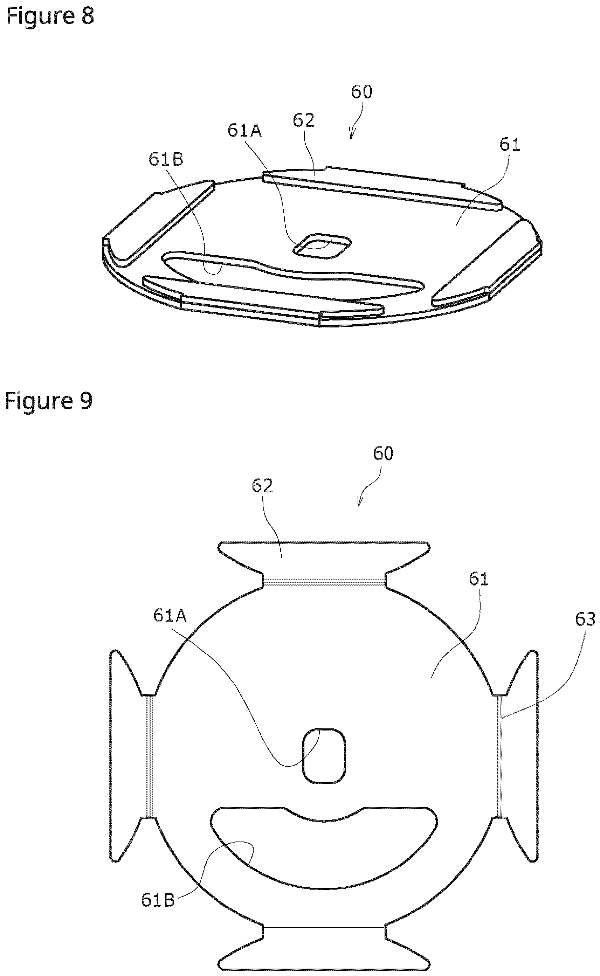

As shown in FIGS. 8 and 9, the upper insulating plate 60 has a body 61 in a substantially disc shape and a plurality of (four in the present embodiment) folded portions 62 in a substantially arc shape formed on the outer circumferential side of the body 61. Linear portions are formed on some parts of the outer circumference of the body 61 for every predetermined angle with respect to the center of the body 61 (for every 90 degrees in the present embodiment), and the folded portions 62 are formed along the linear portions. The body 61 has a hole portion 61A and an opening portion 61B. The inner circumferential side of the folded portions 62 are formed into an arc shape in the unfolded state, and the outer circumferential side is formed in a linear shape. In the linear portion that is a boundary between the body 61 and each of the folded portions 62, a groove portion 63 is formed.

It is to be understood that the present disclosure is not limited to the embodiments and modifications disclosed, and various changes and modifications are possible without departing from the scope of the claims of the present application.

The present disclosure is further described with an embodiment described below.
Configuration 1: a cylindrical battery, comprising: an electrode assembly having a positive electrode and a negative electrode wound through a separator; an outer can that houses the electrode assembly; a sealing assembly mounted on a grooved portion through a gasket, the grooved portion being formed along a circumferential direction of the outer can; and an insulating plate arranged between the grooved portion and the electrode assembly, wherein the insulating plate has a body mounted on the electrode assembly and a folded portion formed by folding an outer circumferential portion toward the body, and is biased toward the electrode assembly from the grooved portion by the folded portion.
Configuration 2: the cylindrical battery according to Configuration 1, wherein the insulating plate is curved so as to swell toward the electrode assembly.
Configuration 3: the cylindrical battery according to Configuration 1 or 2, wherein the folded portion is formed by folding the outer circumferential portion along a groove portion formed on the insulating plate.
Configuration 4: the cylindrical battery according to any one of Configurations 1 to 3, wherein a plurality of the folded portions are formed on an outer circumference of the body.

### REFERENCE SIGNS LIST

10 Cylindrical battery, 11 Positive electrode, 12 Negative electrode, 13 Separator, 14 Electrode assembly, 16 Lower insulating plate, 17 Positive electrode lead, 18 Negative electrode lead, 19 Sealing assembly, 19A Vent portion, 20 Outer can, 20A Bottom portion, 20B Cylindrical portion, 24 Gasket, 28 Grooved portion, 29 Shoulder portion, 30 Upper insulating plate, 31 Body, 31A Hole portion, 31B Opening portion, 32 Folded portion, 33 Groove portion, 40 Upper insulating plate, 41 Body, 41A Hole portion, 41B Opening portion, 42 Folded portion, 43 Groove portion, 50 Upper insulating plate, 51 Body, 51A Hole portion, 51B Opening portion, 52 Folded portion, 53 Groove portion, 60 Upper insulating plate, 61 Body, 61A Hole portion, 61B Opening portion, 62 Folded portion, 63 Groove portion

## Claims

1. A cylindrical battery, comprising:
an electrode assembly having a positive electrode and a negative electrode wound through a separator;
an outer can that houses the electrode assembly;
a sealing assembly mounted on a grooved portion through a gasket, the grooved portion being formed along a circumferential direction of the outer can ; and
an insulating plate arranged between the grooved portion and the electrode assembly, wherein
the insulating plate has a body mounted on the electrode assembly and a folded portion formed by folding an outer circumferential portion toward the body, and
the folded portion biases the insulating plate toward the electrode assembly.

2. The cylindrical battery according to claim 1, wherein the insulating plate is curved so as to swell toward the electrode assembly.

3. The cylindrical battery according to claim 1 or 2, wherein the folded portion is formed by folding the outer circumferential portion along a groove portion formed on the insulating plate.

4. The cylindrical battery according to claim 1 or 2, wherein a plurality of the folded portions are formed on an outer circumference of the body.
